# EUROPEAN PATENT SPECIFICATION

(11) **EP 2 981 898 B1**
(45) Date of publication and mention of the grant of the patent: **25.07.2018**
(21) Application number: 13881062.7
(22) Date of filing: 03.04.2013
(51) Int. Cl.: G06F 13/14, G06F 13/38, G06F 11/34, G06F 11/30

(54) **MICROCONTROLLER AT A CARTRIDGE OF A CHASSIS**
MIKROCONTROLLER AN EINER KARTUSCHE EINES CHASSIS
MICROCONTRÔLEUR AU NIVEAU D'UNE CARTOUCHE D'UN CHÂSSIS

(43) Date of publication of application: 10.02.2016
(73) Proprietor: Hewlett Packard Enterprise Development LP, Houston, TX 77070 (US)
(72) Inventor: BROWN, Andrew, Houston, Texas 77070 (US); HANSEN, Peter, Houston, Texas 77070 (US); ALANIZ, Leopoldo, Houston, Texas 77070 (US); HUA, Chanh V., Houston, Texas 77070 (US)
(74) Representative: HGF Limited
(86) International application number: PCT/US2013/035172
(87) International publication number: WO 2014/163639

(56) References cited:
- JP-A- 2012 178 014
- US-A1- 2005 159 927
- US-A1- 2006 101 197
- US-A1- 2006 129 373
- US-A1- 2008 183 997
- US-A1- 2008 215 806
- US-A1- 2009 276 776
- US-A1- 2012 032 510

## Description

### BACKGROUND

Networked computing systems generally include host computing devices configured to provide resources such as storage, applications, databases, and the like. The host computing device may be a server such as a database server, file server, mail server, print server, web server, or some other type of server configured to provide services to client devices within a network.

A blade server is a server computer having a modular design optimized to minimize the use of physical space. Whereas a standard rack mount server can function with a power cord and network cable, a blade server has many components removed for the purpose of saving space, minimizing power consumption and other considerations, while still having all the functional components to be considered a computer. A multi-slot chassis can hold multiple blade server cartridges and provide shared resources such as power, cooling, networking, various interconnects, and management. In some complex scalable server environments, full centralized management may be difficult. Some blade servers include a full management processor at each server configured to manage the server. However, including a full management processor at each server increases space and cost per server. US2009276776 relates to automatic throttling of resources in an information handling system. A method includes determining whether a first throttling condition exists, the first throttling condition existing when a chassis management controller fails to communicate a clock or synchronization signal to one or more devices in an information handling system chassis for a particular duration of time. The method may also include determining whether a second throttling condition exists, the second throttling condition existing when the chassis management controller fails to communicate data to one or more devices in the information system handling chassis. The method may further include throttling a resource in the information handling system chassis if at least one of the first throttling condition and the second throttling condition exists.

JP2012178014 relates to suppression of damage due to an unpredictable failure by calculating the degree of deterioration by collecting information of a device and executing failure countermeasures in an early stage according to the degree of deterioration

US2012032510 relates to a server management method. A blade server system includes a plurality of blade servers connected to a monitor device in series. The monitor device sends a command to the server system to control the plurality of blade servers. The plurality of blade servers responds to the command. The monitor device receives information from the server system to monitor and control the plurality of blade servers.

US2006101197 relates to an archival cartridge management system for conditioning removable data cartridges and normal archival operations. The archival cartridge management system includes a cartridge holder and a controller. The cartridge holder has a connector configured for coupling to a removable data cartridge. The connector is coupled to the controller, which performs archival functions on removable data cartridges. The controller reads from removable data cartridges to determine if at least some data stored on a removable data cartridge should be refreshed. If so, the controller refreshes data stored on the removable data cartridge.

### BRIEF DESCRIPTION OF THE DRAWINGS

Certain examples are described in the following detailed description and in reference to the drawings, in which:
Fig. 1 is a block diagram illustrating a cartridge including computing resources and a microcontroller;
Fig. 2 is a block diagram illustrating the microcontroller in communication with the computing components and the management controller
Fig. 3 is a block diagram illustrating cartridges of a rack having a microcontroller coupled to the management controller; and
Fig. 4 is a block diagram of a method of monitoring components of a cartridge.

### DETAILED DESCRIPTION OF SPECIFIC EMBODIMENTS

The present techniques set forth by the invention, which is defined in detail in the appended independent claims 1 and 10, relate to a microcontroller at each cartridge in a multi-slot cartridge environment. The microcontroller may serve as a proxy to a management controller at each server by monitoring the computing components of the cartridge and providing monitoring data to a remote management controller to process the data and provide responses to the data.

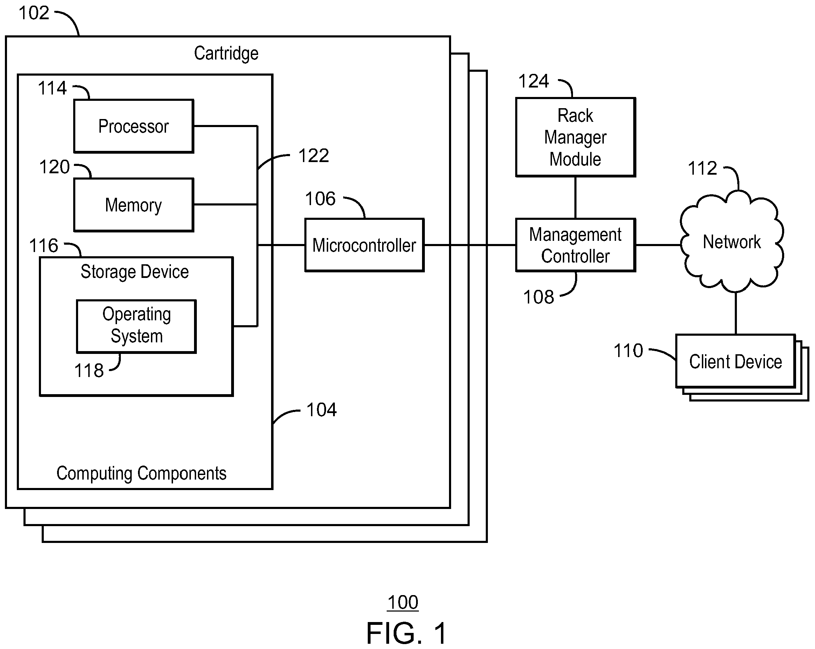

Fig. 1 is a block diagram illustrating a system including a cartridge having a microcontroller. The cartridge 102 may include computing components 104. A microcontroller 106 may monitor the computing components 104. The microcontroller 106 may receive data associated with the operation of the computing components 104, and provide the data to a management controller 108 that is remote from the cartridge 102. As illustrated in Fig. 1, the cartridge 102 may be one of many cartridges. Although not illustrated in Fig. 1, the computing components 104 may be host computing devices including servers configured to provide networked resources to client devices 110 via a network 112.

The computing components 104 may include various components such as a processor 114 and a storage device 116, comprising a non-transitory computer-readable medium. The storage device 114 may also include an operating system 118. The operating system 118 may be executed by a processor of a host computing system such as the processor 114 of the computing components 104. In some embodiments, the storage device 116 has instructions stored thereon that, when executed by the processor 114, cause the computing components 104 to perform operations. In some embodiments, the operations include responding to requests from one of the client devices 110. The processor 114 may be a main processor that is adapted to execute stored instructions. The computing components 104 may also include a memory device 120 that, in some embodiments, stores instructions that are executable by the processor 114. The processor 114 can be a single core processor, a multi-core processor, a computing cluster, or any number of other configurations. The processor 114 may be implemented as Complex Instruction Set Computer (CISC) or Reduced Instruction Set Computer (RISC) processors, x86 Instruction set compatible processors, multi-core, or any other microprocessor or central processing unit (CPU).

The memory device 120 can include random access memory (e.g., SRAM, DRAM, zero capacitor RAM, SONOS, eDRAM, EDO RAM, DDR RAM, RRAM, PRAM, etc.), read only memory (e.g., Mask ROM, PROM, EPROM, EEPROM, etc.), flash memory, or any other suitable memory systems. The main processor 114 may be connected through a system bus 122 (e.g., PCI, ISA, PCI-Express, HyperTransport®, NuBus, etc.) to the other computing components 104. The system bus 122 may communicatively couple the microcontroller 106 to the computing components 104.

The microcontroller 106 monitors the computing components 104 and provides data related to the computing components 104 to the management controller 108, as explained in more detail below. The controller 106 at least partially includes hardware logic. Hardware logic at least partially includes hardware, and may also include software, or firmware. Hardware logic may include electronic hardware including interconnected electronic components that perform analog or logic operations on received and locally stored information to produce an output or store resulting new information or to provide control for output actuator mechanisms. Electronic hardware may include individual chips/circuits and distributed information processing systems.

The system 100 also includes a rack manager module 124. The rack manager module 124 may include a display (not shown) having a graphical administrative interface. The rack manager module 124 may be networked with the cartridge 102 to enable a system administrator to remotely interface with the cartridge 102 via the management controller 108.

The block diagram of Fig. 1 is not intended to indicate that the computing components 104 are to include all of the components shown in Fig. 1. Further, the computing components 104 may include any number of additional components not shown in Fig. 1, depending on the details of the specific implementation.

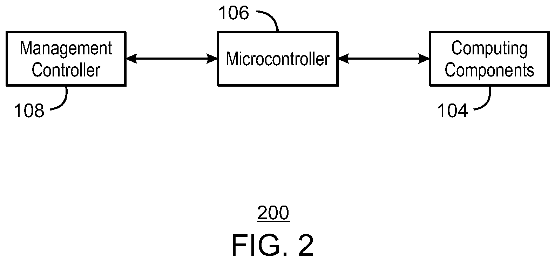

Fig. 2 is a block diagram illustrating the microcontroller in communication with the computing components and the management controller. The microcontroller 106 at least partially comprises hardware logic to receive data associated with the computing components 104 of a cartridge. The microcontroller 106 may, via the hardware logic, provide the data to the management controller 108 that is remote from the cartridge, wherein the management controller 108 is to analyze the data received and communicate operational signals to the microcontroller 106 based on the analysis.

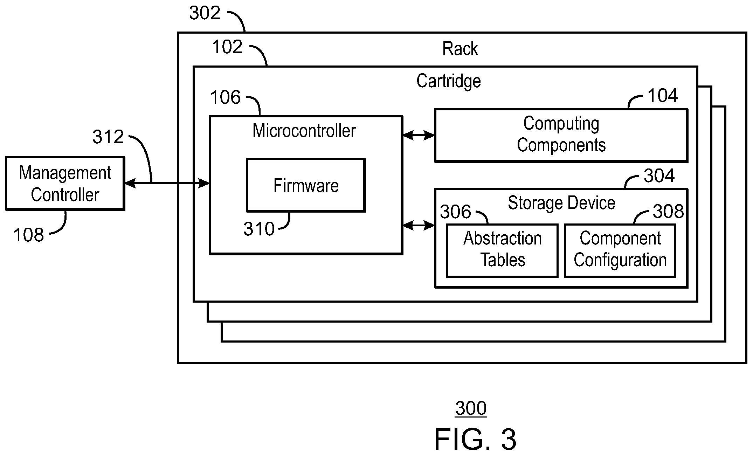

Fig. 3 is a block diagram illustrating cartridges of a rack having a microcontroller coupled to the management controller. A rack 302 may include a plurality of cartridges, such as the cartridges 102 of Fig. 1. The cartridges 102 include the microcontroller 106, the computing components 104, and a storage device 304. The storage device 304 may be remote and separate from the storage device 116 of the computing components 104 discussed above in reference to Fig. 1. The storage device 304 may be an electrically erasable programmable read-only memory (EEPROM) device.

As illustrated in Fig. 3, the storage device 304 may be communicatively coupled to the microcontroller 106. The storage device 304 includes instructions defining a configuration of the computing components 104 of the cartridge 102. For example, the instructions include abstraction tables 306 and component configurations 308. The instructions in the storage device 304 include: standard product information in intelligent platform management interface (IPMI)/ field replaceable unit (FRU) format, abstraction tables (including GPI/O, I2C Buses and Devices, SPI Buses, Firmware UUIDs, Serial Console), thermal tables, IPMI sensor data records (SDRs), and the like. The microcontroller 106 includes firmware 310 configured to receive the instructions from the storage device 304. Upon the powering on the microcontroller 106, the firmware 310 is configured to read the instructions stored on the storage device 304.

In response to receiving the instructions from the storage device 304, the firmware 310 may configure the microcontroller 106 based on the instructions. For example, the microcontroller may include pins configured to communicatively monitor the computing components 104. The instructions may define the computing components 104 that are monitored by each pin or number of pins. The instructions may be provided to the management controller 108. Thus, the management controller 108 may receive data defining the configuration of the microcontroller 106 and receive data defining the configuration of the computing components 104 of the cartridge 102.

The microcontroller 106 monitors the computing components 104. As the operation of one the computing components 104 change, a state of a pin at the microcontroller 106 may change. The change may be provided in the form of a data signal to the management controller 108. The management controller 108 may, in response to the data signal, provide operational instructions to the microcontroller 106 that may then modify the operation of the computing components 104. The instructions provided by the management controller 108 may modify operations of resources that are shared by the cartridge 102 as one of a plurality of cartridges in the rack 302. For example, the rack may share cooling resources such as a fan, or power resources such as a power supply.

As another example of the operation of the microcontroller 106, one of the computing components 104 may be a power button (not shown) configured to enable power to be provided to the cartridge 102. The power button may be communicatively coupled to a pin on the microcontroller 104. When the power button is toggled to an "on" state, the pin on the microcontroller 104 may change state. This change of state may be provided by the microcontroller 106 to the management controller 108. The management controller 108 may recognize the pin as being coupled to the power button by referencing the instructions provided from the storage device 304. In response to the change of state of the pin, the management controller 108 may send instructions to the microcontroller to assert an output pin that may provide power to the computing components 104 of the cartridge 102.

Rather than analyzing the data signal at the microcontroller 106, the analysis is carried out at the management controller 108, thereby enabling the microcontroller 106 to be relatively smaller in size to a controller that may carry out the analysis at the cartridge 102. The microcontroller 106 may provide monitored data to the management controller 108 in an unanalyzed format. Further, the microcontroller 106 may be configured differently than a microcontroller at another cartridge of the plurality of cartridges shown in Fig. 2. Each of the microcontrollers may be configured differently without any change in the firmware 310 of the microcontrollers because the analysis is carried out at the management controller 108. While the configuration of the microcontroller 106 may be different at each of the cartridges, the management controller 108 enables a centralized management solution and distinct configurations at two or more of the microcontrollers.

As discussed above in reference to Fig. 1, the computing components 104 may be a host computing device such as a server. In this embodiment, the cartridge 102 is one of a plurality of cartridges of a multi-cartridge server system. However, the computing components 104 at each cartridge 102 may not necessarily be a server, but may be any combination of computing resources such as storage devices, processors, memory devices, and the like. In either embodiment, the microcontroller 104 is remote from the computing components 104 and interfaces with the management controller 108 which is remote from the cartridge. The management controller 108 may include a processor, storage, and memory, such as the processor 114, storage device 116, and memory device 120 of the computing components 104 of Fig. 1. The management controller 108 may be communicatively coupled to a plurality of microcontrollers, such as the microcontroller 106, via an interface 312. In some embodiments, the interface 312 is an Ethernet bus, wherein the data based on the monitoring of the computing components 104 is provided to the management controller 108 via Internet Protocol (IP).

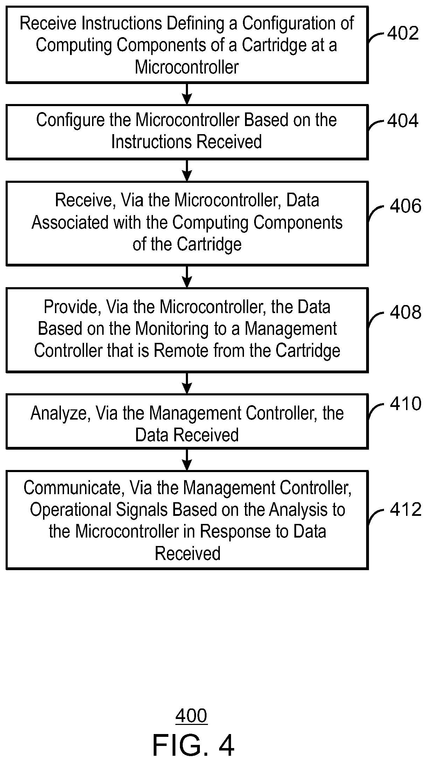

Fig. 4 is a block diagram of a method of monitoring components of a cartridge. The method 400 may include receiving, at block 402 instructions defining a configuration of computing components of the cartridge. The instructions may be stored on a storage device and may be received from the storage device at a microcontroller of the cartridge. The method 400 may include configuring, at block 404, the microcontroller based on the instructions received. The configuration instructions may be based on the type of computing components installed on the cartridge. The microcontroller may monitor operation of the computing components. The method 400 may include receiving, at block 406, data associated with the computing components of the cartridge via the microcontroller. The data may be provided, at block 408, to a management controller that is remote from the cartridge. The management controller may analyze, at block 410, the data received, and communicate, at block 412, operational signals based on the analysis to the microcontroller in response to the data received.

As discussed above in reference to Fig. 3, rather than analyzing the data at the microcontroller, the data is analyzed at the management controller which is remote from the cartridge. In some embodiments, the microcontroller may be considered a proxy for the management controller in which the data is gathered but not analyzed by the microcontroller. By providing a microcontroller that gathers data by monitoring the computing components of the cartridge, the microcontroller may be smaller in size and lower in cost than if a the microcontroller were configured to perform operations including analyzing the data of the computing components. Further, data from a plurality of cartridges may be received by the management controller from a microcontroller at each of the cartridges, respectively. The management controller may be, therefore, a centralized processor enabling the microcontrollers to have different configurations having one centralized processing mechanism.

The method 400 may also include receiving, at the management controller, data defining the configuration of the microcontroller, and data defining the configuration of the computing components. Therefore, when data is received that is associated with the operation of the computing components, the management controller may refer to the configuration data to identify the components and to identify the monitored data of the components. The management controller may provide instructions in response to data received at the microcontroller and provided to the management controller. Thus, the method 400 may include analyzing, via the management controller, the data received indicating the operations of the computing components. The method 400 may also include providing instructions to the microcontroller to modify operations of the computing components of the cartridge. In some embodiments, the method 400 may include providing instructions to modify operations of resources, such as cooling mechanisms and power supply mechanisms, that are shared by the cartridge as one of a plurality of cartridges in a rack.

The microcontroller is configured based on the configuration of the computing components of the cartridge. In some embodiments, the method 400 includes configuration of the microcontroller without any change in a firmware of the microcontroller. Because the microcontroller does not perform operations including analysis of the data received by monitoring the computing components, the microcontroller firmware may be common between all of the cartridges in a rack of a rack server system.

The terms, descriptions and figures used herein are set from by way of illustration only and are not meant as limitations.

## Claims

1. A microcontroller (106), at least partially comprising hardware logic, to:
configure the microcontroller (106) based on instructions from a storage device (304) of a cartridge (102), the instructions of the storage device (304) to define a configuration of the computing components (104) of the cartridge (102);
receive data associated with computing components (104) of the cartridge (102); and
provide the data to a management controller (108) that is remote from the cartridge (102), wherein the management controller (108) is to analyze the data received and communicate operational signals to the microcontroller (106) based on the analysis, wherein microcontroller (106) is disposed at the cartridge (102), and the management controller (108) is to:
receive data defining the configuration of the microcontroller (106); and
receive the instructions, via the microcontroller (106), defining the configuration of the computing components (104) of the cartridge (102).

2. The microcontroller (106) of claim 1, wherein the management controller (108) is to analyze the data received and provide instructions to the microcontroller (106) to modify operations of:
the computing components (104) of the cartridge (102);
resources that are shared by the cartridge (102) as one of a plurality of cartridges in a rack (302); or
any combination thereof.

3. The microcontroller (106) of claim 1, wherein the microcontroller (106) is to monitor data without analyzing the data, and provides the data to the remote management controller (108) in an unanalyzed format.

4. The microcontroller (106) of claim 1, wherein the microcontroller (106) is configured without any change in a firmware (310) of the microcontroller (106).

5. A computing system, comprising:
the microcontroller (106) of any one of claims 1 to 5;
the cartridge (102), the cartridge (102) comprising the microcontroller (106), the microcontroller (106) to monitor the data associated with computing components (104), the data associated with computing components (104) including data generated by components of the cartridge (102);
the storage device (304); and
the management controller (108), remote from the cartridge (102), to:
receive the data generated by the components via the microcontroller (106); and
communicate operational signals, based on the analysis, to the microcontroller (106) in response to data received.

6. The computing system of claim 5, wherein the components of computing system are managed via the operational signals provided by the management controller (108) remote from the cartridge (102).

7. The computing system of claim 5, comprising pins of the microcontroller (106), wherein the microcontroller (106) monitors the data generated by the computing components (104) via changes in the pins.

8. The computing system of claim 7, wherein the computing components (104) comprise a host computing device and the microcontroller (106) is remote from the host computing device, and the management controller (108) is coupled, via the microcontroller (106), to the host computing device.

9. The computing system of claim 5, wherein the management controller (108) is to analyze the data received and provide instructions to the microcontroller (106) to modify operations of:
the computing components (104) of the cartridge (102);
resources that are shared by the cartridge (102) as one of a plurality of cartridges; and
any combination thereof.

10. A method, comprising:
receiving instructions, from a storage device (304) of a cartridge (102) to a microcontroller (106) of the cartridge (102), defining a configuration of computing components (104) of the cartridge (102);
configuring the microcontroller (106) based on the instructions received;
providing, to a management controller (108) that is remote from the cartridge (102), via the microcontroller (106), data defining the configuration of the microcontroller (106), and the instructions, defining the configuration of the computing components (104) of the cartridge (102);
receiving, at the microcontroller (106), data associated with the computing components (104) of the cartridge (102); and
providing, via the microcontroller (106), the data associated with the computing components (104) to the management controller (108);
analyzing, via the management controller (108), the data received; and
communicating, via the management controller (108), operational signals based on the analysis to the microcontroller (106) in response to data received.

11. The method of claim 10, wherein microcontroller (106) is disposed at the cartridge (102), comprising:
receiving, via the management controller (108), data defining the configuration of the microcontroller (106); and
receiving, via the management controller (108), data defining the configuration of the computing components (104) of the cartridge (102).

12. The method of claim 10, comprising:
analyzing, via the management controller (108), the data received; and
providing instructions to modify operations of:
the computing components (104) of the cartridge (102);
resources that are shared by the cartridge (102) as one of a plurality of cartridges in a rack (302); or
any combination thereof.

13. The method of claim 10, wherein the microcontroller (106) is configured without any change in a firmware (310) of the microcontroller (106).

## Patentansprüche

1. Mikrocontroller (106), wenigstens teilweise Hardwarelogik umfassend, zum:
Konfigurieren des Mikrocontrollers (106), basierend auf Anweisungen von einer Speichervorrichtung (304) einer Kartusche (102), wobei die Anweisungen der Speichervorrichtung (304) eine Konfiguration der Computerkomponenten (104) der Kartusche (102) definieren;
Empfangen von Daten, die mit Computerkomponenten (104) der Kartusche (102) verknüpft sind; und
Bereitstellen der Daten an einen Verwaltungscontroller (108), der von der Kartusche (102) entfernt ist, wobei der Verwaltungscontroller (108) die empfangenen Daten analysieren soll und Betriebssignale an den Mikrocontroller (106), basierend auf der Analyse, kommunizieren soll, wobei der Mikrocontroller (106) an der Kartusche (102) angeordnet ist und der Verwaltungscontroller (108) Folgendes ausführen soll:
Empfangen von Daten, die die Konfiguration des Mikrocontrollers (106) definieren; und Empfangen der Anweisungen über den Mikrocontroller (106), die die Konfiguration der Computerkomponenten (104) der Kartusche (102) definieren.

2. Mikrocontroller (106) nach Anspruch 1, wobei der Verwaltungscontroller (108) die empfangenen Daten analysieren soll und Anweisungen an den Mikrocontroller (106) bereitstellen soll, die Vorgänge der Folgenden zu modifizieren:
der Computerkomponenten (104) der Kartusche (102);
von Ressourcen, die von der Kartusche (102) als eine von mehreren Kartuschen in einem Gestell (302) geteilt werden; oder
einer beliebigen Kombination davon.

3. Mikrocontroller (106) nach Anspruch 1, wobei der Mikrocontroller (106) Daten überwachen soll, ohne die Daten zu analysieren, und die Daten an den entfernten Verwaltungscontroller (108) in einem nicht analysierten Format bereitstellt.

4. Mikrocontroller (106) nach Anspruch 1, wobei der Mikrocontroller (106) ohne eine Veränderung in einer Firmware (310) des Mikrocontrollers (106) konfiguriert ist.

5. Computersystem, Folgendes umfassend:
den Mikrocontroller (106) nach einem der Ansprüche 1 bis 5;
die Kartusche (102), wobei die Kartusche (102) den Mikrocontroller (106) umfasst, wobei der Mikrocontroller (106) die Daten, die mit den Computerkomponenten (104) verknüpft sind, überwacht, wobei die mit den Computerkomponenten (104) verknüpften Daten Daten beinhalten, die durch Bestandteile der Kartusche (102) erzeugt werden;
die Speichervorrichtung (304); und
den Verwaltungscontroller (108), der von der Kartusche (102) entfernt ist, zum:
Empfangen der durch die Komponenten erzeugten Daten über den Mikrocontroller (106); und
Kommunizieren von Betriebssignalen, basierend auf der Analyse, an den Mikrocontroller (106) als Reaktion auf die empfangenen Daten.

6. Computersystem nach Anspruch 5, wobei die Komponenten des Computersystems durch die Betriebssignale, die durch den Verwaltungscontroller (108), der von der Kartusche (102) entfernt ist, bereitgestellt werden, verwaltet werden.

7. Computersystem nach Anspruch 5, Pins des Mikrocontrollers (106) umfassend, wobei der Mikrocontroller (106) die durch die Computerkomponenten (104) erzeugten Daten durch Veränderungen in den Pins überwacht.

8. Computersystem nach Anspruch 7, wobei die Computerkomponenten (104) eine Hostcomputervorrichtung umfassen und der Mikrocontroller (106) von der Hostcomputervorrichtung entfernt ist, und der Verwaltungscontroller (108) über den Mikrocontroller (106) an die Hostcomputervorrichtung gekoppelt ist.

9. Rechensystem nach Anspruch 5, wobei der Verwaltungscontroller (108) die empfangenen Daten analysieren soll und Anweisungen an den Mikrocontroller (106) bereitstellen soll, die Vorgänge der Folgenden zu modifizieren:
der Computerkomponenten (104) der Kartusche (102);
von Ressourcen, die von der Kartusche (102) als eine von mehreren Kartuschen geteilt werden; und
einer beliebigen Kombination davon.

10. Verfahren, Folgendes umfassend:
Empfangen von Anweisungen von einer Speichervorrichtung (304) einer Kartusche (102) an einem Mikrocontroller (106) der Kartusche (102), die eine Konfiguration von Computerkomponenten (104) der Kartusche (102) definieren;
Konfigurieren des Mikrocontrollers (106) basierend auf den empfangenen Anweisungen; Bereitstellen über den Mikrocontroller (106) von Daten, die die Konfiguration des Mikrocontrollers (106) definieren, und der Anweisungen, die die Konfiguration der Computerkomponenten (104) der Kartusche (102) definieren, an einen Verwaltungscontroller (108), der von der Kartusche (102) entfernt ist;
Empfangen an dem Mikrocontroller (106) von Daten, die mit den Computerkomponenten (104) der Kartusche (102) verknüpft sind; und
Bereitstellen der Daten, die mit den Computerkomponenten (104) verknüpft sind, über den Mikrocontroller (106) an den Verwaltungscontroller (108);
Analysieren der empfangenen Daten durch den Verwaltungscontroller (108); und basierend auf der Analyse, Kommunizieren von Betriebssignalen durch den Verwaltungscontroller (108) an den Mikrocontroller (106) als Reaktion auf empfangene Daten.

11. Verfahren nach Anspruch 10, wobei der Mikrocontroller (106) an der Kartusche (102) angeordnet ist, Folgendes umfassend:
Empfangen über den Verwaltungscontroller (108) von Daten, die die Konfiguration des Mikrocontrollers (106) definieren; und
Empfangen über den Verwaltungscontroller (108) von Daten, die die Konfiguration der Computerkomponenten (104) der Kartusche (102) definieren.

12. Verfahren nach Anspruch 10, Folgendes umfassend:
Analysieren der empfangenen Daten durch den Verwaltungscontroller (108); und Bereitstellen von Anweisungen, um die Vorgänge der Folgenden zu modifizieren:
der Computerkomponenten (104) der Kartusche (102);
von Ressourcen, die von der Kartusche (102) als eine von mehreren Kartuschen in einem Gestell (302) geteilt werden; oder einer beliebigen Kombination davon.

13. Verfahren nach Anspruch 10, wobei der Mikrocontroller (106) ohne eine Veränderung in einer Firmware (310) des Mikrocontrollers (106) konfiguriert ist.

## Revendications

1. Microcontrôleur (106), comprenant au moins en partie une logique matérielle, permettant de :
configurer le microcontrôleur (106) sur la base des instructions provenant d'un dispositif de stockage (304) d'une cartouche (102), les instructions du dispositif de stockage (304) visant à définir une configuration des composants informatiques (104) de la cartouche (102) ;
recevoir des données associées aux composants informatiques (104) de la cartouche (102) ; et
fournir les données à un contrôleur de gestion (108) distant de la cartouche (102), dans lequel le contrôleur de gestion (108) est conçu pour analyser les données reçues et communiquer des signaux opérationnels au microcontrôleur (106) sur la base de l'analyse, dans lequel le microcontrôleur (106) est disposé au niveau de la cartouche (102) et le contrôleur de gestion (108) est conçu pour :
recevoir des données définissant la configuration du microcontrôleur (106) ; et
recevoir les instructions, via le microcontrôleur (106), définissant la configuration des composants informatiques (104) de la cartouche (102).

2. Microcontrôleur (106) selon la revendication 1, dans lequel le contrôleur de gestion (108) est conçu pour analyser les données reçues et fournir des instructions au microcontrôleur (106) pour modifier les opérations :
des composants informatiques (104) de la cartouche (102) ;
des ressources partagées par la cartouche (102) en tant qu'une cartouche parmi la pluralité de cartouches dans une baie (302) ; ou
de toute combinaison de ceux-ci.

3. Microcontrôleur (106) selon la revendication 1, dans lequel le microcontrôleur (106) est conçu pour surveiller des données sans analyser les données, et fournit les données au contrôleur de gestion à distance (108) dans un format non analysé.

4. Microcontrôleur (106) selon la revendication 1, dans lequel le microcontrôleur (106) est configuré sans aucune modification dans un micrologiciel (310) du microcontrôleur (106).

5. Système informatique, comprenant :
le microcontrôleur (106) de l'une quelconque des revendications 1 à 5 ;
la cartouche (102), la cartouche (102) comprenant le microcontrôleur (106), le microcontrôleur (106) étant destiné à surveiller les données associées aux composants informatiques (104), les données associées aux composants informatiques (104) comportant des données générées par des composants de la cartouche (102) ;
le dispositif de stockage (304) ; et
le contrôleur de gestion (108), distant de la cartouche (102), permettant de :
recevoir les données générées par les composants via le microcontrôleur (106) ; et
communiquer des signaux opérationnels, sur la base de l'analyse, au microcontrôleur (106) en réponse aux données reçues.

6. Système informatique selon la revendication 5, dans lequel les composants du système informatique sont gérés via les signaux opérationnels fournis par le contrôleur de gestion (108) distant de la cartouche (102).

7. Système informatique selon la revendication 5, comprenant des broches du microcontrôleur (106), dans lequel le microcontrôleur (106) surveille les données générées par les composants informatiques (104) via des modifications dans les broches.

8. Système informatique selon la revendication 7, dans lequel les composants informatiques (104) comprennent un dispositif informatique hôte et le microcontrôleur (106) est distant du dispositif informatique hôte, et le contrôleur de gestion (108) est couplé, via le microcontrôleur (106), au dispositif informatique hôte.

9. Système informatique selon la revendication 5, dans lequel le contrôleur de gestion (108) est conçu pour analyser les données reçues et fournir des instructions au microcontrôleur (106) pour modifier les opérations :
des composants informatiques (104) de la cartouche (102) ;
des ressources partagées par la cartouche (102) en tant qu'une cartouche parmi une pluralité de cartouches ; et
de toute combinaison de ceux-ci.

10. Procédé, consistant à :
recevoir des instructions, provenant d'un dispositif de stockage (304) d'une cartouche (102) jusqu'à un microcontrôleur (106) de la cartouche (102), définissant une configuration de composants informatiques (104) de la cartouche (102) ;
configurer le microcontrôleur (106) sur la base des instructions reçues ;
fournir, à un contrôleur de gestion (108) distant de la cartouche (102), via le microcontrôleur (106), des données définissant la configuration du microcontrôleur (106), et les instructions, définissant la configuration des composants informatiques (104) de la cartouche (102) ;
recevoir, au niveau du microcontrôleur (106), des données associées aux composants informatiques (104) de la cartouche (102) ; et
fournir, via le microcontrôleur (106), les données associées aux composants informatiques (104) au contrôleur de gestion (108) ;
analyser, via le contrôleur de gestion (108), les données reçues ; et
communiquer, via le contrôleur de gestion (108), des signaux opérationnels sur la base de l'analyse au microcontrôleur (106) en réponse aux données reçues.

11. Procédé selon la revendication 10, dans lequel le microcontrôleur (106) est disposé au niveau de la cartouche (102), consistant à :
recevoir, via le contrôleur de gestion (108), des données définissant la configuration du microcontrôleur (106) ; et
recevoir, via le contrôleur de gestion (108), des données définissant la configuration des composants informatiques (104) de la cartouche (102).

12. Procédé selon la revendication 10, consistant à :
analyser, via le contrôleur de gestion (108), les données reçues ; et
fournir des instructions pour modifier les opérations :
des composants informatiques (104) de la cartouche (102) ;
des ressources partagées par la cartouche (102) en tant qu'une cartouche parmi une pluralité de cartouches dans une baie (302) ; ou
de toute combinaison de ceux-ci.

13. Procédé selon la revendication 10, dans lequel le microcontrôleur (106) est configuré sans aucun changement dans un micrologiciel (310) du microcontrôleur (106).
